# DEMANDE DE BREVET EUROPEEN

(11) **EP 0 529 683 A2**
(43) Date de publication de la demande: **03.03.1993**
(21) Numéro de dépôt: 92116639.3
(22) Date de dépôt: 04.03.1988
(51) Int. Cl.: A01B 33/02, A01B 9/00

(54) **Machine agricole de travail du sol avec roues de soutènement**

(30) Priorité: 06.03.1987 FR 8703219
(62) Demande divisionnaire de: 88440013.6
(71) Demandeur: KUHN S.A., F-67700 Saverne (FR)
(72) Inventeur: Kirch, Michel, F-57430 Sarralbe (FR)

(57) **Abrégé**

Selon l'invention, la profondeur de travail du rotor (16) est déterminée par des roues de soutènement (36, 38), dont une (36) est agencée devant l'extrémité latérale (12) du châssis (9) la plus en avant et s'étend devant le carter latéral (37).

## Description

La présente invention concerne une machine agricole de travail du sol comportant une structure d'attelage, un châssis lié à ladite structure d'attelage, un rotor supporté par ledit châssis et dont l'axe longitudinal s'étend obliquement par rapport à la direction d'avance au travail, ledit rotor étant muni d'outils de travail du sol présentant chacun une concavité dirigée vers l'extrémité du rotor la plus en avant, compte tenu du sens de travail, ledit rotor étant en sus entraîné positivement autour de son axe longitudinal par une source motrice au moyen d'organes de transmission comportant notamment un carter latéral implanté à l'extrémité latérale du châssis la plus en avant, de telle sorte qu'à la partie frontale du rotor, les outils de travail du sol se déplacent vers le sol, et une roue de soutènement s'étendant dans le voisinage de l'extrémité latérale du châssis la plus en arrière.

On connaît une telle machine (CH-A-433 843), dont les outils de travail du sol comportent chacun un disque bombé ayant une forme de calotte sphérique dont le bord est crénelé et dont la concavité est dirigée vers l'extrémité du rotor la plus en avant, compte tenu du sens de travail de la machine.

Cette machine connue comporte, à l'extrémité latérale du châssis la plus en avant, un carter latéral destiné à transmettre le mouvement au rotor, de même qu'une roue de soutènement s'étendant dans le voisinage de l'extrémité latérale du châssis la plus en arrière. Cette roue de soutènement, dont la position en hauteur est réglable par rapport au châssis de la machine, est destinée à contrôler la profondeur de travail des outils de travail du sol.

Le soutènement de cette machine connue n'est pas réalisé de manière optimale. En effet, compte tenu du poids du carter latéral, la machine a tendance à travailler à une profondeur plus importante à l'extrémité latérale du châssis la plus en avant, c'est-à-dire là où est agencé ledit carter latéral. Comme la machine est plus basse à cette extrémité, la partie inférieure du carter latéral frotte au fond de la raie, ce qui peut provoquer des bourrages et entraîne une usure rapide du carter latéral.

Dans la FR-A-2 148 368 est décrite une machine agricole de travail du sol comportant une structure d'attelage, un châssis lié à ladite structure d'attelage et un rotor supporté par ledit châssis et dont l'axe longitudinal s'étend obliquement par rapport à la direction d'avance au travail. Le rotor est muni d'outils de travail du sol comportant chacun quatre bêches courbées. Deux bêches diamétralement opposées d'un même outil de travail du sol ont leurs courbures respectives dirigées vers les deux extrémités du rotor. Ledit rotor est entraîné positivement autour de son axe longitudinal par une source motrice au moyen d'organes de transmission comportant notamment une transmission à engrenages latérale implantée à l'extrémité latérale du châssis la plus en arrière. Dans le voisinage frontal de chaque extrémité du châssis est implantée une roue de soutènement, la roue de soutènement implantée devant l'extrémité du châssis la plus en arrière, s'étendant à une grande distance devant la transmission à engrenages prévue à cette extrémité correspondante du châssis. De cette sorte, la transmission à engrenages peut venir en contact avec des obstacles enfouis dans le sol. Par ailleurs, des débris végétaux et/ou de la terre peuvent s'y coller et provoquer des bourrages.

Dans la GB-A-2 133 663 est décrite une machine agricole de travail du sol équipée d'un rotor dont l'axe longitudinal s'étend orthogonalement à la direction de travail de la machine. Le rotor est entraîné positivement autour de son axe longitudinal par une source motrice au moyen d'organes de transmission comportant notamment un carter latéral implanté à une extrémité latérale du châssis de la machine. Dans le voisinage frontal de chaque extrémité du châssis est implantée une roue de soutènement, la roue de soutènement implantée à l'extrémité du châssis où est prévu le carter latéral s'étendant à une grande distance en avant dudit carter latéral et de surcroît en vue suivant la direction de travail, à côté de celui-ci. Cette machine connue devrait donc présenter les mêmes inconvénients que celle décrite dans la FR-A-1 148 368.

Le but de la présente invention est d'améliorer le soutènement d'une machine agricole de travail du sol telle que celle décrite dans la CH-A-433 843, de protéger le carter latéral et d'éviter des bourrages au niveau de celui-ci.

Ce but a été atteint en dotant une machine agricole de travail du sol comportant :
- une structure d'attelage,
- un châssis lié à ladite structure d'attelage,
- un rotor supporté par ledit châssis et dont l'axe longitudinal s'étend obliquement par rapport à la direction d'avance au travail, ledit rotor étant muni d'outils de travail du sol présentant chacun une concavité dirigée vers l'extrémité du rotor la plus en avant, compte tenu du sens de travail, ledit rotor étant en sus entrainé positivement autour de son axe longitudinal par une source motrice au moyen d'organes de transmission comportant notamment un carter latéral implanté à l'extrémité latérale du châssis la plus en avant, de telle sorte qu'à la partie frontale du rotor, les outils de travail du sol se déplacent vers le sol, et
- une roue de soutènement s'étendant dans le voisinage de l'extrémité latérale du châssis la plus en arrière
des caractéristiques suivantes :
- une deuxième roue de soutènement est disposée devant l'extrémité latérale du châssis la plus en avant, de sorte à rouler dans la raie,
- la deuxième roue de soutènement s'étend directement devant le carter latéral, et
- le carter latéral s'étend dans le sillage de la deuxième roue de soutènement.

La disposition particulière de cette deuxième roue de soutènement permet d'une part un bon soutien de la machine et d'autre part d'éviter au carter latéral de talonner et de frotter sur le sol. Ceci conduit à limiter l'usure de la partie inférieure dudit carter latéral. La disposition particulière de cette deuxième roue de soutènement permet aussi d'éviter des bourrages au niveau du carter latéral.

Selon une caractéristique supplémentaire de l'invention, la position de chaque roue de soutènement pourra être individuellement réglable par rapport au châssis (revendication 2).

Avantageusement, cette position pourra être réglable de manière continue (revendication 3).

Il pourra aussi être prévu que chaque roue de soutènement soit liée à un montant qui est destiné, durant le réglage de la position de la roue correspondante, à glisser dans un tube correspondant lié au châssis (revendication 4).

Selon une autre caractéristique supplémentaire de l'invention, la deuxième roue de soutènement pourra s'étendre, en vue de dessus, directement à côté de la structure d'attelage (revendication 5).

Selon une autre caractéristique supplémentaire de l'invention, la première roue de soutènement pourra s'étendre, devant la paroi latérale de l'extrémité correspondante du châssis (revendication 6).

L'invention sera parfaitement comprise grâce à la description suivante d'un exemple non limitatif de réalisation d'une machine agricole de travail du sol selon l'invention. Cette description fait référence au dessin annexé sur lequel :
- la figure 1 représente, en vue de dessus, un exemple de réalisation d'une machine selon l'invention attelée à un tracteur ;
- la figure 2 représente, vue en perspective trois quarts avant, l'extrémité gauche de la machine de la figure 1.

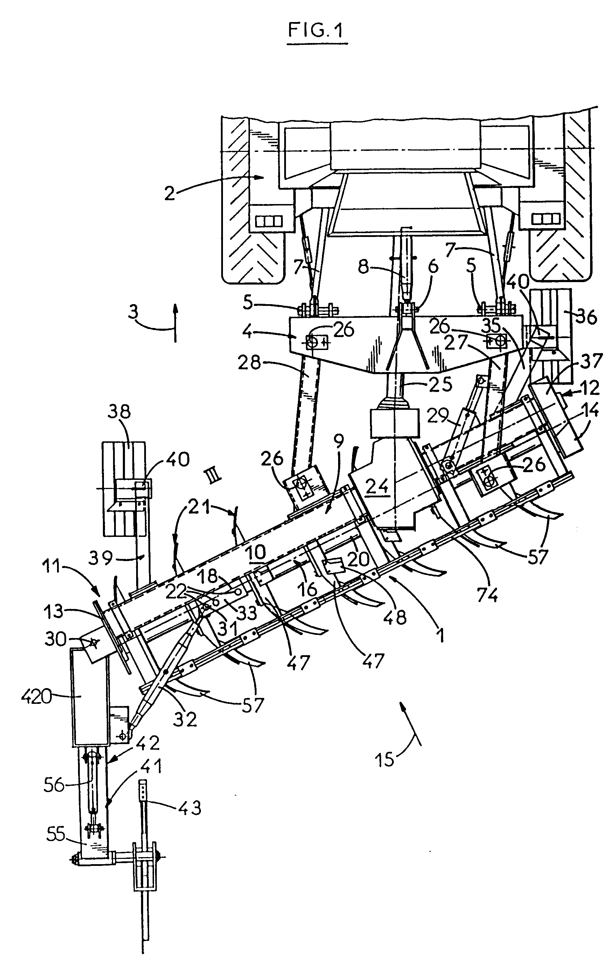

Sur la figure 1, la machine agricole de travail du sol (1) selon l'invention est attelée à un tracteur agricole (2) qui tire celle-ci dans le sens et la direction de travail (3).

A cet effet, la machine (1) est munie d'une structure d'attelage (4) qui comporte deux points d'attelage inférieurs (5) et un point d'attelage supérieur (6). Ces points d'attelage (5, 6) sont accouplés respectivement aux bras inférieurs (7) et à la bielle de poussée (8) du mécanisme d'attelage à trois points du tracteur (2).

La partie arrière de la structure d'attelage (4) est liée au châssis (9) de la machine (1). Le châssis (9) est composé d'une traverse supérieure (10) qui comporte à chacune de ses extrémités (11, 12) une paroi latérale (13, 14) s'étendant vers le bas. Vu suivant la flèche (15), le châssis (9) a une forme de U renversé. Vu de dessus, le châssis (9) s'étend obliquement par rapport à la direction de travail (3), de telle sorte que son extrémité droite (12) soit située plus en avant que son extrémité gauche (11).

Entre les extrémités inférieures des parois latérales (13, 14) est implanté un rotor (16) qui s'étend parallèlement au châssis (9), c'est-à-dire que - vu de l'arrière dans le sens de travail (3) - l'extrémité droite du rotor (16) est située plus en avant que son extrémité gauche.

Le rotor (16) comporte une poutre centrale (20) sur laquelle sont fixés des outils de travail du sol (21). Ces outils de travail du sol (21) sont chacun constitué d'un disque bombé (47), dont la concavité est dirigée vers l'extrémité droite (12) du rotor (16), qui s'étend la plus en avant, compte tenu du sens de travail (3), et de bêches (48) implantées à la périphérie dudit disque bombé (47).

Pendant le travail, le rotor (16) est entraîné positivement en rotation autour de son axe longitudinal (18), de telle sorte qu'à sa partie frontale, les bêches (48) des outils de travail du sol (21) se déplacent vers le sol. A cet effet, le châssis (9) comporte sensiblement au niveau du plan longitudinal de symétrie du tracteur (2), un carter de renvoi (24) qui est réalisé sous forme de boîte de vitesses. Ce carter de renvoi (24) reçoit le mouvement de l'arbre de prise de force (non représenté) du tracteur (2) par l'intermédiaire d'un arbre de transmission à joints universels (25).

Le carter de renvoi (24) est, par ailleurs, lié mécaniquement avec un carter latéral (37) situé à l'extrémité droite (12) du châssis (9) et qui forme la paroi latérale (14). Le carter de renvoi (24) transmet ainsi au carter latéral (37) le mouvement rotatif reçu du tracteur (2). Ce carter latéral (37) transmet ensuite le mouvement au rotor (16) d'une façon connue de l'homme de l'art.

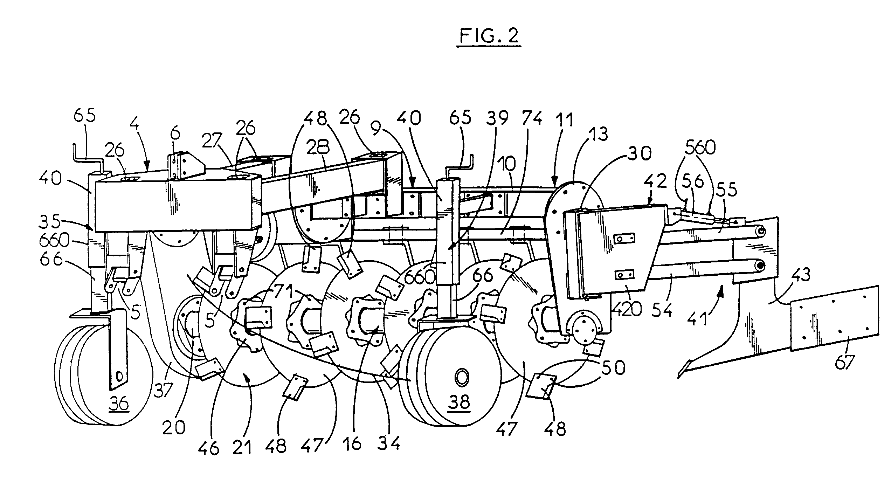

On voit encore qu'à l'avant de ses extrémités (11, 12) (et plus précisément devant les parois latérales (13, 14) correspondantes), le châssis (9) est muni de deux roues de soutènement (36, 38) qui roulent sur le sol pendant le travail. Chaque roue de soutènement (36, 38) est liée au châssis (9) au moyen d'une structure de support (35, 39) constituée de telle sorte que l'on puisse modifier verticalement la position de la roue (36, 38) par rapport au châssis (9) grâce à un mécanisme de réglage (40) qui est représenté plus en détail sur la figure 2.

La roue (36), située à l'extrémité droite (12) du châssis (9), s'étend directement devant le carter latéral (37) et directement à côté de la structure d'attelage (4). Durant le travail, cette roue (36) roule dans la raie.

A l'arrière de l'extrémité gauche (11) du châssis (9) est également lié un organe de stabilisation latérale (41). Cet organe de stabilisation latérale (41) est lié au châssis (9) au moyen d'une structure support (42) qui est également vue plus en détail sur la figure 2.

L'organe de stabilisation latérale (41) comporte un soc (43) qui s'engage dans le sol pendant le travail dans le sillage de l'outil de travail du sol (21) implanté à l'extrémité correspondante du rotor (16). A l'arrière, le soc (43) est muni d'une plaque (67) lui conférant un bon pouvoir de stabilisation.

Ledit organe de stabilisation latérale (41) absorbe l'effort transversal qui s'exerce sur le rotor (16) pendant le travail et qui est engendré par l'inclinaison dudit rotor (16).

A l'arrière de la traverse supérieure (10) du châssis (9) est fixée une poutre (74) sur laquelle sont fixés des décrotteurs-versoirs (57) associés chacun à un outil de travail du sol (21).

On remarque également sur la figure 1 que la liaison entre la structure d'attelage (4) et le châssis (9) est réalisée à l'aide de deux bielles (27, 28).

Ces deux bielles (27, 28) sont toutes les deux montées de façon articulée d'une part sur la structure d'attelage (4) et d'autre part sur la traverse (10) du châssis (9) par l'intermédiaire d'articulations (26) d'axe dirigé vers le haut. Un vérin hydraulique (29) implanté entre la bielle (27) et la traverse (10) du châssis (9), permet de manoeuvrer le quadrilatère déformable formé par lesdites bielles (27, 28) (dans l'exemple décrit, un parallélogramme) pour amener la machine (1) dans une position de travail (telle que représentée) ou dans la position de transport (non représentée).

Dans la position de transport, la machine de travail du sol (1) est recentrée par rapport au plan médian du tracteur (2), de telle sorte que l'encombrement global de l'ensemble tracteur (2)-machine (1) soit réduit.

Pour diminuer encore d'avantage l'encombrement latéral de la machine, on peut replier, au transport, l'organe de stabilisation latérale (41) derrière le rotor (16). Pour ce faire, la structure support (42) est liée au châssis (9) par une articulation (30) d'axe dirigé vers le haut.

Le verrouillage de l'organe de stabilisation latérale (41) dans ses positions de travail et dans sa position de transport s'opère en changeant la position de l'axe (31) de la bielle de maintien (32) sur la chape (33) fixée sur le châssis (9), qui comporte, à cet effet, différents trous (22) destinés à recevoir l'axe (31).

Sur la figure 2, on voit de manière plus détaillée le rotor (16) comportant la poutre centrale (20) sur laquelle sont fixés, à des intervalles régulièrement espacés, des flasques (46). Les flasques (46) servent à fixer les outils de travail du sol (21) sur la poutre centrale (20). Cette fixation est réalisée au moyen de quatre boulons (71).

Lesdits flasques (46) sont agencés sur la poutre centrale (20) de telle sorte que chaque outil de travail du sol (21) soit décalé angulairement autour de l'axe longitudinal (18) du rotor (16) par rapport à ses outils de travail du sol (21) adjacents. Les outils de travail du sol (21) sont, comme dit plus haut, constitués chacun d'un disque bombé (47) sur lequel est fixé un groupe de bêches (48). Les bêches (48) correspondantes de deux outils de travail du sol (21) consécutifs génèrent ainsi une hélice (34) en vue d'une pénétration progressive des différents outils de travail du sol (21) dans le sol. Les bêches (48) sont fixées à leur disque bombé (47) correspondant par des vis (50).

Sur la droite de la figure 2, on voit distinctement la disposition de l'organe de stabilisation latérale (41). Celui-ci est, comme dit précédemment, lié à l'extrémité (11) du châssis (9) la plus en arrière par l'intermédiaire de la structure support (42). Cette structure support (42) est, comme dit plus haut, liée à la paroi latérale (13) du châssis (9) par l'intermédiaire d'une articulation (30) d'axe dirigé vers le haut et est maintenue dans une position choisie par l'intermédiaire de la bielle de maintien (32). La structure support (42) comporte un support de stabilisation (420) à l'arrière duquel s'étendent deux barres (54, 55) qui lient le soc (43) audit support de stabilisation (420). La liaison des barres (54, 55) sur le support de stabilisation (420) et sur le soc (43) est réalisée de manière articulée, de telle sorte à créer un quadrilatère (au moins sensiblement un parallélogramme) déformable dans un plan au moins sensiblement vertical. Sur le parallélogramme ainsi créé agit un vérin hydraulique (56) à double effet implanté entre le support de stabilisation (420) et la barre supérieure (55) du parallélogramme. Ce vérin hydraulique (56) est commandé par des éléments de commande hydraulique (560).

La constitution de l'organe de stabilisation latérale (41) décrit ci-avant, permet à l'utilisateur de modifier l'intensité d'action dudit organe de stabilisation latérale (41) et ceci pendant le travail en agissant depuis la cabine de pilotage du tracteur (2) sur les éléments de commande (560) du vérin hydraulique (56).

Les éléments de commande hydraulique (560) peuvent être munis d'un dispositif à déclenchement (non représenté) permettant au soc (43) de se dégager du sol lorsqu'il rencontre un obstacle enfoui dans le sol, tel qu'une roche par exemple.

On voit encore sur la figure 2, au premier plan, les roues de soutènement (36, 38) et leur structure de support respective (35, 39) avec leur organe de réglage (40). Le réglage se fait au moyen d'une manivelle (65) solidaire d'une vis (non représentée) agissant sur un écrou (non représenté) solidaire d'un montant (66) lié à la roue (36, 38) correspondante et qui glisse dans un tube (660) correspondant lié au châssis (9).

Le réglage de la hauteur relative entre le châssis (9) et les roues (36, 38) permet de moduler à volonté la profondeur de travail des outils de travail du sol (21).

La machine qui vient d'être décrite fonctionne de la manière suivante :
Au travail, la machine (1) est attelée à un tracteur (2) qui la tire dans le sens et la direction de travail (3). Simultanément, la prise de force dudit tracteur (2) entraîne en rotation le rotor (16). En tournant, les bêches (48) solidaires des disques (47), arrachent chacune une motte de terre.

Comme l'axe longitudinal (18) du rotor (16) s'étend obliquement par rapport à la direction de travail (3), la bêche (48) imprime à la motte arrachée un mouvement qui est dirigé transversalement à la direction de travail (3). La motte est ensuite reprise par la face concave du disque (47) qui va commencer à la retourner. Du fait de la présence du décrotteur-versoir (57), on assure que la motte soit bien décollée de la face concave du disque (47). Mais, on assure surtout qu'elle soit parfaitement retournée comme désiré. Le décrotteur-versoir (57) parachève, en effet, le retournement de la motte commencé par le disque (47).

Etant donné que la machine est entraînée en rotation positivement par une source motrice, elle est capable de travailler dans des terres très variées. En sus, la qualité du travail fourni est relativement constante.

Selon les travaux à réaliser, on pourra régler la vitesse de rotation du rotor (16), ainsi que la profondeur de travail des outils de travail du sol (21). Le réglage de la vitesse de rotation du rotor (16) sera réalisé en modifiant le régime de sortie du carter de renvoi (24), tandis que la profondeur de travail sera réglée par le mécanisme de réglage (40) des roues de soutènement (36, 38).

La roue de soutènement (36) s'étendant devant le carter latéral (37) roule dans la raie. Elle protège le carter latéral (37) de l'usure et évite les bourrages dans cette zone.

## Revendications

1. Machine agricole de travail du sol (1) comportant une structure d'attelage (4), un châssis (9) lié à ladite structure d'attelage (4), un rotor (16) supporté par ledit châssis (9) et dont l'axe longitudinal (18) s'étend obliquement par rapport à la direction d'avance (3) au travail, ledit rotor (16) étant muni d'outils de travail du sol (21) présentant chacun une concavité dirigée vers l'extrémité du rotor (16) la plus en avant, compte tenu du sens de travail (3), ledit rotor (16) étant en sus entraîné positivement autour de son axe longitudinal (18) par une source motrice (2) au moyen d'organes de transmission (25, 24, 37) comportant notamment un carter latéral (37) implanté à l'extrémité latérale (12) du châssis (9) la plus en avant, de telle sorte qu'à la partie frontale du rotor (16), les outils de travail du sol (21) se déplacent vers le sol, et une roue de soutènement (38) s'étendant dans le voisinage de l'extrémité latérale (11) du châssis (9) la plus en arrière, caractérisée par le fait que la machine (1) comporte une deuxième roue de soutènement (36) disposée devant l'extrémité latérale (12) du châssis (9) la plus en avant, de sorte à rouler dans la raie et s'étendant directement devant le carter latéral (37), lequel s'étend dans le sillage de cette deuxième roue de soutènement (36).

2. Machine agricole de travail du sol selon la revendication 1, caractérisée par le fait que la position de chaque roue de soutènement (36, 38) est individuellement réglable par rapport au châssis (9).

3. Machine agricole de travail du sol selon la revendication 2, caractérisée par le fait que la position de chaque roue de soutènement (36, 38) est réglable de manière continue par rapport au châssis (9).

4. Machine agricole de travail du sol selon la revendication 2 ou 3, caractérisée par le fait que chaque roue de soutènement (36, 38) est liée à un montant (66) qui est destiné, durant le réglage de la position de la roue (36, 38) correspondante, à glisser dans un tube (660) correspondant lié au châssis (9).

5. Machine agricole de travail du sol selon l'une au moins des revendications 1 à 4, caractérisée par le fait que la deuxième roue de soutènement (36) s'étend, en vue de dessus, directement à côté de la structure d'attelage (4).

6. Machine agricole de travail du sol selon l'une au moins des revendications 1 à 5, caractérisée par le fait que la première roue de soutènement (38) s'étend devant la paroi latérale (13) de l'extrémité correspondante (11) du châssis (9).
